# EUROPÄISCHE PATENTSCHRIFT

(11) **EP 1 269 068 B1**
(45) Veröffentlichungstag und Bekanntmachung des Hinweises auf die Patenterteilung: **26.04.2006**
(21) Anmeldenummer: 01986892.6
(22) Anmeldetag: 18.12.2001
(51) Int. Cl.: F16M 11/12, F16M 11/18

(54) **VORRICHTUNG ZUM DREHEN EINES KÖRPERS UM ZWEI ACHSEN**
DEVICE FOR ROTATING A BODY ABOUT TWO AXES
DISPOSITIF PERMETTANT LA ROTATION D'UN CORPS AUTOUR DE DEUX AXES

(30) Priorität: 11.01.2001 DE 10100872
(43) Veröffentlichungstag der Anmeldung: 02.01.2003
(73) Patentinhaber: LTN Servotechnik GmbH, 83624 Otterfing (DE)
(72) Erfinder: ANGERPOINTNER, Ludwig, 81247 München (DE)
(74) Vertreter: Hofmann, Ernst
(86) Internationale Anmeldenummer: PCT/EP2001/014974
(87) Internationale Veröffentlichungsnummer: WO 2002/055922

(56) Entgegenhaltungen:
- EP-B- 0 714 579
- DE-U- 29 712 356
- FR-A- 2 704 050
- US-A- 4 673 268
- US-A- 5 153 485

## Beschreibung

Die Erfindung betrifft eine Vorrichtung zum Drehen eines Körpers um zwei Achsen.

Durch diese Vorrichtung können in einen Körper, etwa einem optischen Gerät, Kippbewegungen (Drehung um eine horizontale Achse) und Schwenkbewegungen (Drehung um eine vertikale Achse) eingeleitet werden. Derartige Drehbewegungen sind häufig für den wirksamen Betrieb von fembedienten Kameras, aber auch von anderen Geräten z. B. aus dem Bereich der Optik, wie etwa Lichtquellen (Scheinwerfer, Laser, etc.) erforderlich.

Darüber hinaus werden Vorrichtungen zum Drehen eines Körpers um zwei Achsen auch zum Bewegen von Werkzeugen in der Robotertechnik eingesetzt.

Häufig müssen die zu drehenden Körper in elektrischem Kontakt zu einer elektrischen Einheit stehen, etwa zum Austausch von Signalen oder zur Übertragung von elektrischer Versorgungsleistung. Diese elektrische Einheit nimmt üblicherweise nicht an den Rotationsbewegungen des zu drehenden Körpers teil und ist ortsfest aufgestellt. Zur Ermöglichung einer uneingeschränkten Drehbewegung von entsprechenden Körpern um 360° werden Schleifringe eingesetzt.

In der Patenschrift US 4673268 wird eine Vorrichtung zum Kippen und Schwenken einer Kamera gezeigt. Der dort beschriebene Schleifring dient sowohl zur Übertragung der Antriebsströme für die sich mitdrehenden Verstellmotoren, als auch zur Signalübertragung. Zu diesem Zweck wurde der Schleifring ortsfest und axial nicht verschiebbar in den Träger der Vorrichtung eingebaut.

Die Schrift EP 0714579 B1 offenbart ebenfalls eine Vorrichtung zum Kippen und Schwenken einer Kamera, wobei der für die Schwenkbewegung maßgebliche Antrieb ortsfest an einer Grundplatte befestigt ist. Dagegen ist der Antrieb, welcher die Kippbewegungen bewirkt derart angeordnet, dass sich dieser bei Ausführung einer Schwenkbewegung mitdreht. Der für den Betrieb der Vorrichtung vorgesehene Schleifring ist ebenfalls ortsfest und axial nicht verschiebbar an der Grundplatte befestigt.

In der DE 29712356 U1 wird gleichfalls eine Vorrichtung zum Drehen einer Kamera um zwei Achsen gezeigt, bei der sich ein Schwenkmotor auf einem drehbaren Bauteil befindet. Der Schleifring ist in der dort gezeigten Anordnung im Betrieb in Axialrichtung nicht bewegbar. Darüber hinaus kann dieser auch axial nicht belastet werden, weil durch das Aufbringen von Axialkräften die beiden Schleifringkomponenten Rotor und Stator mechanisch voneinander getrennt werden.

Aus der Patentschrift US 5153485 ist eine Vorrichtung zum Drehen eines Körpers um zwei Achsen vorbekannt, bei der eine Welle mit einer Außenverzahnung an einen Antrieb zur Übertragung von Axialbewegungen angekoppelt ist. Eine elektrische Drehverbindung ist dort im Hinblick auf die herbeizuführenden Axialbewegungen mechanisch ohne Wirkung.

Die bekannten Vorrichtungen weisen unter anderem den Nachteil auf, dass zumindest ein elektrischer Drehantrieb mit dem zu drehenden Körper mitrotiert. Dieser Antrieb, muss über den Schleifring mit elektrischer Energie versorgt werden, was den Aufbau des Schleifringes aufwendiger macht. Hinzu kommt, dass ein elektrischer Drehantrieb eine nicht zu vernachlässigende träge Masse aufweist, die wiederum bei großen Winkelbeschleunigungen des zu drehenden Körpers erhebliche Reaktionskräfte bzw. -momente verursacht. Häufig wird die Dynamik der kompletten Vorrichtung zum Drehen eines Körpers, einschließlich deren Antrieb, durch das Massenträgheitsmoment und damit auch durch die Masse der zu bewegenden Bauteile limitiert, bzw. macht für eine vorgegebene Winkelbeschleunigung eine entsprechend großzügige Dimensionierung der relevanten Bauteile notwendig.

Der Erfindung liegt daher die Aufgabe zugrunde, eine Vorrichtung zum Drehen eines Körpers um zwei Achsen zu schaffen, die sich durch eine einfache Bauweise und vergleichsweise geringe Trägheitsmassen auszeichnet. Diese Aufgabe wird durch eine Vorrichtung gemäß Anspruch 1 gelöst.

Vorteilhafte Ausführungsformen der erfindungsgemäßen Vorrichtung ergeben sich aus den Maßnahmen in den von Anspruch 1 abhängigen Ansprüchen.

Der mit der Erfindung erzielte Vorteil besteht darin, dass durch die neue Vorrichtung die Antriebe zur Drehung um die beiden Achsen ortsfest angeordnet werden können. Auf diese Weise wird die gesamte Konstruktion unter anderem dahingehend vereinfacht, dass der Schleifring weniger Schleifkontakte aufweist. Gegebenenfalls kann der Schleifring ohne Kontakte zur Übertragung von Antriebsstrom ausgeführt werden, so dass nur Schleifkontakte für elektrische Niederspannungssignale vorzusehen sind. Auf der anderen Seite kann durch die Vermeidung von mitrotierenden Antrieben die zu bewegende Masse und damit das Massenträgheitsmoment der Gesamtanordnung reduziert werden, so dass die Bewegungsdynamik des Körpers gesteigert werden kann. Darüber hinaus ist durch die Erfindung eine leichtere und materialsparendere Bauweise der Vorrichtung zum Drehen eines Körpers um zwei Achsen aufgrund der geringeren mechanischen Belastungen möglich.

Die Erfindung beruht insbesondere auf dem Gedanken, dass durch Axialbewegungen des Schleifringes Drehbewegungen in den zu drehenden Körper eingeleitet werden. Unter der Richtungsangabe axial ist stets die Richtung der Schleifringachse gemeint.

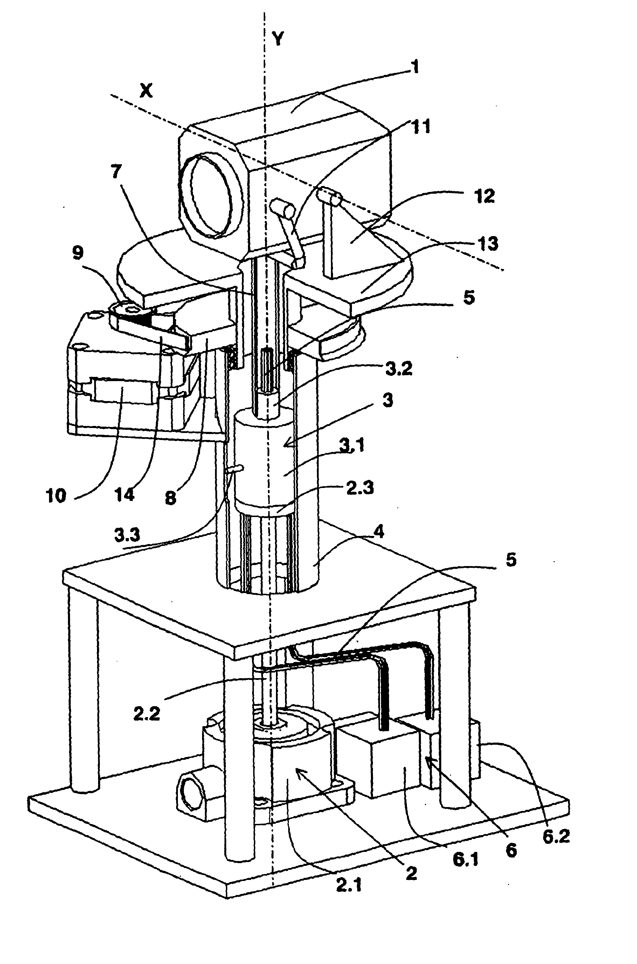

Ein mögliches Ausführungsbeispiel der Erfindung wird anhand der Zeichnung näher erläutert.

Die Zeichnung zeigt schematisch den Aufbau einer Vorrichtung zum Drehen eines Körpers in Form einer Kamera 1 um zwei Achsen X und Y, die vorzugsweise orthogonal angeordnet sind.

Damit ein sich mitdrehender Antrieb bei dieser Vorrichtung vermieden werden kann, wird eine Drehbewegung der Kamera 1, in diesem Beispiel die Kippbewegung um die Achse X, ursächlich durch einen Axialbewegungsantrieb in Form eines pneumatischen Hubantriebes 2 herbeigeführt. Dieser Hubantrieb 2 weist einen ortsfesten Teil 2.1 und ein in Axialrichtung bewegtes Hubelement auf, das in diesem Beispiel aus einem in der Zeichnung nicht sichtbaren Hubkolben mit einer damit verbundenen Hubstange 2.2 besteht.

Alternativ dazu kann auch ein Axialbewegungsantrieb Vorteile aufweisen, der auf einem hydraulischem Prinzip beruht. Der Axialbewegungsantrieb kann aber auch als ein elektrischer Antrieb ausgebildet sein. Dabei kann entweder ein handelsüblicher rotatorischer Elektromotor verwendet werden, bei dem die Bewegung der rotierenden Welle in eine Linearbewegung, z. B. mit einer Gewindespindel oder einem Kurbeltrieb umgewandelt wird. Es kann mit Vorteil aber auch ein Linearmotorantrieb eingesetzt werden, mit dem direkt eine lineare Axialbewegung erzeugt wird. Dabei kann der Linearmotor auch derart gestaltet sein, dass dessen Primärteil das zu bewegende Sekundärteil - oder auch umgekehrt - ganz oder teilweise umschließt (z. B. Tauchspulenprinzip). Für den Fall, dass der zu drehende Körper nicht zwingend mit Hilfe von Fremdenergie zumindest in einer Achse gedreht werden muss, kann der Axialbewegungsantrieb auch als manuelle Betätigungsvorrichtung ausgestaltet sein. Entsprechend den unterschiedlichen Ausführungsmöglichkeiten des Axialbewegungsantriebes müssen auch die dazugehörigen Hubelemente jeweils anders geartet ausgeführt werden. So können vorzugsweise bei rotatorischen Antrieben, basierend z. B. auf einem elektrischen, pneumatischen oder hydraulischen Prinzip, Gewindespindeln oder Kurbelstangen als Hubelemente dienen. Bei einem Linearmotor wird das bewegte Sekundärteil als Hubelement bezeichnet. Dementsprechend sind bei z. B. pneumatischen oder hydraulischen Hubkolben die bewegten Kolben- oder Hubstangen die Hubelemente.

Zur Einleitung der Axialbewegung ist die Hubstange 2.2 an dem Stator 3.1 eines Schleifringes 3 angekoppelt. In diesem Beispiel ist an das obere Ende der Hubstange 2.2 ein Flansch 2.3 angebracht, dessen Fläche mit dem unteren Ende des Stators 3.1 des Schleifringes 3 verklebt wird. In diesem Flansch 2.3 sind Ausnehmungen, durch welche Leitungen 5 für die Bildsignalübertragung und für die Bedienung eines Zoomantriebes in der Kamera 1 gezogen sind.

Der Schleifring 3 muss zwei Funktionen erfüllen, nämlich die Übertragung von mechanischen Hubbewegungen und die Gewährleistung einer elektrischen Verbindung zur rotierenden Kamera 1.

Der Schleifring 3 besteht aus dem Stator 3.1 und dem Rotor 3.2. Der Stator 3.1 ist derjenige Teil, der nicht drehbar gegenüber einem Trägerkörper 4 angeordnet ist. Im Folgenden ist von einer Anordnung auszugehen, bei welcher der Schleifring 3, also Rotor 3.2 und Stator 3.1 zusammen, eine geschlossene Einheit bzw. ein separates Bauelement innerhalb der Vorrichtung zum Drehen der Kamera 1 um zwei Achsen X,Y bildet.

Der Stator 3.1 hat an seinem Umfang als Verdrehsicherung zwei gegenüberliegende radial nach außen gerichtete Ansätze 3.3, die in Ausnehmungen des rohrförmigen Trägerkörpers 4 nach oben und unten, entsprechend der Hubamplitude gleiten können. Diese Ansätze 3.3 lassen eine axiale Bewegung des gesamten Schleifringes 3 im Trägerkörper 4 zu, aber verhindern eine Drehbewegung des Stators 3.1.

Selbstverständlich kann mit allen bekannten formschlüssigen Verdrehsicherungen, wie z. B Polygonwellen- oder eckige Querschnitte des Stators 3.1, Pass-, Scheiben- oder Keilwellenverbindungen mit einem jeweils dazu passendem Gegenprofil des Trägerkörpers 4 dieses Ziel erreicht werden.

Demgegenüber nimmt der Rotor 3.2 an der Drehbewegung der zu drehenden Kamera 1 teil.

Wie bereits oben erwähnt, werden in den Schleifring 3, ausgehend vom pneumatischen Hubantrieb 2 Axialbewegungen eingeleitet. Durch die Axialbewegungen wird eine Drehbewegung um die Achse X (Kippbewegung) der Kamera 1 bewirkt. Bei der Konstruktion des Schleifringes 3 muss daher darauf geachtet werden, dass dieser den axialen Belastungen, die durch diese Kippbewegungseinleitung entstehen können standhält. Dies ist dann besonders wichtig, wenn die Axialbewegung und damit die Axialkraft nur am Stator 3.1 angekoppelt wird, und über Rotor 3.2, in den zu drehenden Körper wieder abgeleitet wird. Zur Vermeidung dieser Scherbelastung zwischen Stator 3.1 und Rotor 3.2 können die Axialkräfte des Hubantriebes 2 lediglich in den Rotor 3.2 eingeleitet werden. Diese Variante erfordert eine spezielle Konstruktion für die Ankopplung zwischen Rotor 3.2 und Hubstange 2.2, welche die Übertragung von Axialkräften und zugleich eine Relativdrehung zwischen Rotor 3.2 und Hubstange 2.2 zulässt. Besonders geeignet sind in diesem Zusammenhang als Ankopplungselement Wälzlager aus der Gruppe der Axiallager.

Der Schleifring 3 enthält Schleifkontakte, durch die elektrische Kontakte zwischen Rotor 3.2 und Stator 3.1 und letztlich zwischen rotierender Kamera 1 und den dazugehörigen ortsfesten und nicht drehbar installierten elektrischen Einheiten 6 hergestellt werden. In diesem Beispiel umfassen die elektrischen Einheiten 6 ein Videogerät 6.1 und eine Fernbedienung 6.2 für einen Zoomantrieb in der Kamera 1. Es muss sichergestellt sein, dass trotz der eingeleiten Axialkraft eine einwandfreie Funktion des Schleifringes 3 gewährleistet ist.

Das obere Ende des Schleifrings 3 gehört zu dessen Rotor 3.2. Dieser ist zylinderförmig aufgebaut und dient gleichzeitig als Aufnahme für eine hohlzylindrische Schubstange 7. Die Verbindung zwischen Schubstange 7 und dem Endbereich des Rotors 3.2 muss sowohl den axialen Belastungen standhalten, als auch ein relativ geringes Drehmoment übertragen. Durch eine Verklebung wird hier eine taugliche und fertigungstechnisch günstige Verbindung erreicht. Die Leitungen 5 vom Rotor 3.2 zur Kamera 1 führen durch die hohlzylindrische Schubstange 7.

Die Schwenkbewegung der Kamera 1 wird von einem ortsfesten und mit dem Trägerkörper 4 fest verbundenen Elektromotor 10 ausgelöst. Dieser Elektromotor 10 weist an seiner Welle ein Antriebszahnrad 9 auf. Über einen Zahnriemen 14 wird die Drehbewegung des Antriebszahnrades 9 des Elektromotors 10 auf ein Abtriebszahnrad 8 übertragen. Dieses ist drehfest mit dem nach unten gerichteten Rohrstutzen der Schwenkplattform 13 verbunden. Entsprechend dem Übersetzungsverhältnis des Zahnriemengetriebes 8; 9; 14 wird auf diese Weise die Drehbewegung des Elektromotors 10 in eine Drehbewegung der Schwenkplattform 13 um die Achse Y und letztlich in die Schwenkbewegung der Kamera 1 umgesetzt.

Das obere Ende der Schubstange 7 steht mit einem gabelförmigen Koppelmechanismus 11 in Verbindung, welcher am Gehäuse der Kamera 1 an zwei Seiten drehbar befestigt ist. Durch den Versatz der Drehachse X und der Linie, welche durch die beiden Befestigungspunkte des Koppelmechanismus 11 am Gehäuse der Kamera 1 gebildet werden, wird durch eine Axialbewegung der Hubstange 2.2 letztlich eine Kippbewegung der Kamera 1 erzeugt.

Selbstverständlich können auch andere Anordnungen zum Einsatz kommen, die von dem im Ausführungsbeispiel gezeigten Koppelmechanismus abweichen. So kann der Koppelmechanismus 11 auch als einarmige Ausführung im Sinne einer fliegenden Lagerung ausgebildet sein. Es können aber auch die Axialbewegungen in Drehbewegungen, insbesondere Kippbewegungen des Körpers, umgesetzt werden, indem die Axialbewegungen in einem Bereich des Körpers eingeleitet werden, der versetzt zu dessen Dreh- bzw. Lagerachse ist. Diese Bewegungseinleitung kann direkt auf das Gehäuse des Körpers wirken. Selbstverständlich kann die Axialbewegung auch durch eine Zahnstange eingeleitet werden, die in ein Zahnrad greift, welches am zu drehenden Körper befestigt ist. Besonders kostengünstig ist eine Bauweise, bei der die Drehbewegung über die Zugkraft einer Schnur, eines Drahtes oder dergleichen eingeleitet wird. In diesem Fall ist ein Rückstellelement, etwa eine Feder, zur Drehung in Richtung der Ausgangsposition zweckmä-βig.

Abweichend von dem gezeigten Ausführungsbeispiel kommen als zu drehende Körper beispielsweise auch Scheinwerfer, Lasereinrichtungen oder Roboterbauteile in Betracht. Entsprechend den unterschiedlichen Typen von zu drehenden Körpern müssen auch unterschiedliche elektrische Verbindungen zwischen Körper und der ortsfest aufgestellten elektrischen Einheit hergestellt werden. Vorzugsweise kann auch ein System zur Messung der Kippposition des Körpers vorgesehen sein. In diesem Fall können die Positionsmesssignale über den Schleifring auf eine weitere elektrische Einheit übertragen werden, die als Auswertegerät ausgebildet ist. Es ist natürlich bei der erfindungsgemäßen Vorrichtung auch möglich, dass die Kippposition anhand der Lage der Hubstange bzw. der des Schleifringes ermittelt wird. Insbesondere wenn der zu drehende Körper ein Roboterbauteil ist, können eine Vielzahl von Sensorsignalen und elektrischer Strom zu Verstellantrieben an eine oder mehrere elektrische Einheit(en) übertragen werden. Diese umfassen in diesem Fall Geräte zur Auswertung der Signale als auch Stromversorgungsgeräte.

Ergänzend zur Übertragung von elektrischer Energie können über den Schleifring, der dann gleichzeitig als Drehdurchführung dient, auch Massenströme übertragen werden. Diese Massenströme können zum Beispiel Druckluft für pneumatische oder Öl für hydraulische Vorrichtungen sein, mit denen der zu drehende Körper versehen ist. Die besagten Massenströme müssen aber nicht zwingend zur Übertragung von Hilfsenergie dienen. Es ist auch möglich, dass der zu drehende Körper als Dosiereinheit verwendet wird, so dass entsprechende Medien über den Schleifring mit Drehdurchführung von einer ortsfesten Dosiereinheit zu einem sich drehenden Körper gefördert werden.

Die Erfindung umfasst auch Vorrichtungen, bei der über die Axialbewegungen von mehreren Schleifringen Drehbewegungen auf mehrere Körper; die beispielsweise gemeinsam auf einer Schwenkplattform angeordnet sind, eingeleitet werden.

## Patentansprüche

1. Vorrichtung zum Drehen eines Körpers (1) um zwei Achsen (X,Y), bestehend aus
- einem Schleifring (3) zur Ermöglichung einer Drehbewegung des Körpers (1) um die erste Achse (Y), wobei der Stator (3.1) des Schleifringes (3) drehfest an einem Trägerkörper (4) gelagert ist, und der Rotor (3.2) des Schleifringes (3) mit dem drehbaren Körper (1) in Verbindung steht,
- zumindest einer in Bezug zum Trägerkörper (4) drehfest fixierten elektrischen Einheit (6), die über den Schleifring (3) in elektrischem Kontakt zum drehbaren Körper (1) steht,
**dadurch gekennzeichnet, dass** der Schleifring (3) an einen Axialbewegungsantrieb (2) zur Übertragung von Axialbewegungen angekoppelt ist, so dass über die Axialbewegungen des Schleifringes (3) Drehbewegungen des Körpers (1) um die zweite Achse (X) bewirkt werden.

2. Vorrichtung nach Anspruch 1, **dadurch gekennzeichnet, dass** das äußere Teil des Schleifringes (3) als Stator (3.1) und das innere als Rotor (3.2) dient.

3. Vorrichtung nach Anspruch 1 oder 2, **dadurch gekennzeichnet, dass** die Axialbewegungen des Schleifringes (3) Drehbewegungen des Körpers (1) bewirken, deren Drehachse (X) im Wesentlichen orthogonal zur Richtung der Axialbewegung (Y) liegen.

4. Vorrichtung nach einem der Ansprüche 1 bis 3, **dadurch gekennzeichnet, dass** die Axialbewegungen des Schleifringes (3) über einen Koppelmechanismus (11) in Drehbewegungen des Körpers (1) umgewandelt werden.

5. Vorrichtung nach einem der Ansprüche 1 bis 4, **dadurch gekennzeichnet, dass** der Axialbewegungsantrieb (2) aus einem ortsfesten Teil (2.1) und einem in Axialrichtung bewegbaren Hubelement (2.2) besteht und der Schleifring (3) an das Hubelement (2.2) angekoppelt ist.

6. Vorrichtung nach einem der Ansprüche 1 bis 5, **dadurch gekennzeichnet, dass** zwischen Schleifring (3) und dem Hubelement (2.2) und/oder Schleifring (3) und dem Körper (1) zumindest eine Stange zur Übertragung der Axialbewegung angeordnet ist.

7. Vorrichtung nach einem der Ansprüche 1 bis 6, **dadurch gekennzeichnet, dass** der Axialbewegungsantrieb (2) einen Elektromotor umfasst.

8. Vorrichtung nach einem der Ansprüche 1 bis 7, **dadurch gekennzeichnet, dass** der Körper (1) eine Kamera umfasst.

9. Vorrichtung nach einem der Ansprüche 1 bis 8, **dadurch gekennzeichnet, dass** der Körper (1) eine Lichtquelle oder einen Spiegel umfasst.

10. Vorrichtung nach einem der Ansprüche 1 bis 9, **dadurch gekennzeichnet, dass** der Körper (1) ein Roboterteil umfasst.

11. Vorrichtung nach einem der Ansprüche 1 bis 10, **dadurch gekennzeichnet, dass** der Schleifring (3) im Sinne einer Drehdurchführung auch zur Übertragung von fluiden Stoffen dient.

## Claims

1. Device for rotating a body (1) about two axes (X, Y), comprising
- a collector ring (3) to make possible a rotational movement of the body (1) about the first axis (Y), the stator (3.1) of the collector ring (3) being mounted non-rotatably on a carrier body (4) and the rotor (3.2) of the collector ring (3) being connected to the rotatable body (1),
- at least one electrical unit (6) which is fixed non-rotatably relative to the carrier body (4) and is in electrical contact with the rotatable body (1) via the collector ring (3),
**characterised in that** the collector ring (3) is coupled to an axial movement drive (2) for transmitting axial movements so that rotational movements of the body (1) about the second axis (X) are effected via the axial movements of the collector ring (3).

2. Device according to claim 1, **characterised in that** the outer part of the collector ring (3) serves as stator (3.1) and the inner part as rotor (3.2).

3. Device according to claim 1 or 2, **characterised in that** the axial movements of the collector ring (3) effect rotational movements of the body (1), the axis of rotation (X) of which is essentially situated orthogonally relative to the direction of the axial movement (Y).

4. Device according to one of the claims 1 to 3, **characterised in that** the axial movements of the collector ring (3) are converted into rotational movements of the body (1) via a coupling mechanism (11).

5. Device according to one of the claims 1 to 4, **characterised in that** the axial movement drive (2) comprises a stationary part (2.1) and a lift element (2.2) which can be moved in the axial direction and the collector ring (3) is coupled to the lift element (2.2).

6. Device according to one of the claims 1 to 5, **characterised in that** at least one rod for transmitting the axial movement is disposed between the collector ring (3) and the lift element (2.2) and/or the collector ring (3) and the body (1).

7. Device according to one of the claims 1 to 6, **characterised in that** the axial movement drive (2) comprises an electric motor.

8. Device according to one of the claims 1 to 7, **characterised in that** the body (1) comprises a camera.

9. Device according to one of the claims 1 to 8, **characterised in that** the body (1) comprises a light source or a mirror.

10. Device according to one of the claims 1 to 9, **characterised in that** the body (1) comprises a robot part.

11. Device according to one of the claims 1 to 10, **characterised in that** the collector ring (3) serves also for transmitting fluid materials in the sense of a rotary transmission leadthrough.

## Revendications

1. Dispositif pour tourner un corps (1) autour de deux axes (X, Y), constitué de
- une bague collectrice (3) pour permettre un mouvement de rotation du corps (1) autour du premier axe (Y), le stator (3.1) de la bague collectrice (3) étant solidarisé en rotation au corps porteur (4), et le rotor (3.2) de la bague collectrice (3) étant relié au corps tournant (1),
- au moins un module électrique (6) qui est fixe en rotation par rapport au corps porteur (4) et qui, par l'intermédiaire de la bague collectrice (3), est en contact électrique avec le corps tournant (1), **caractérisé en ce que** la bague collectrice (3) est accouplée à une commande de déplacement axial (2) pour transmettre des déplacements axiaux, de façon que les déplacements axiaux de la bague collectrice (3) provoquent des mouvements de rotation du corps (1) autour du second axe (X).

2. Dispositif selon la revendication 1, **caractérisé en ce que** la partie extérieure de la bague collectrice (3) sert de stator (3.1) et la partie intérieure de rotor (3.2).

3. Dispositif selon la revendication 1 ou 2, **caractérisé en ce que** les déplacements axiaux de la bague collectrice (3) provoquent des mouvements de rotation du corps (1) dont l'axe de rotation (X) est sensiblement orthogonal à la direction du déplacement axial (Y).

4. Dispositif selon une des revendications 1 à 3, **caractérisé en ce que** les déplacements axiaux de la bague collectrice (3) sont convertis en mouvements de rotation du corps (1) par l'intermédiaire d'un mécanisme d'accouplement (11).

5. Dispositif selon une des revendications 1 à 4, **caractérisé en ce que** la commande de déplacement axial (2) est constituée d'une partie fixe (2.1) et d'un élément élévateur (2.2) déplaçable dans la direction axiale, et la bague collectrice (3) est accouplée à l'élément élévateur (2.2).

6. Dispositif selon une des revendications 1 à 5, **caractérisé en ce qu'**entre la bague collectrice (3) et l'élément élévateur (2.2) et/ou la bague collectrice (3) et le corps (1) est disposée au moins une tige pour transmettre le déplacement axial.

7. Dispositif selon une des revendications 1 à 6, **caractérisé en ce que** la commande de déplacement axial (2) comprend un moteur électrique.

8. Dispositif selon une des revendications 1 à 7, **caractérisé en ce que** le corps (1) comprend une caméra.

9. Dispositif selon une des revendications 1 à 8, **caractérisé en ce que** le corps (1) comprend une source lumineuse ou un miroir.

10. Dispositif selon une des revendications 1 à 9, **caractérisé en ce que** le corps (1) comprend une partie de robot.

11. Dispositif selon une des revendications 1 à 10, **caractérisé en ce que**, à la façon d'un passage tournant, la bague collectrice (3) sert aussi à la transmission de substances fluides.
